# FASCICULE DE BREVET EUROPEEN

(11) **EP 1 775 160 B1**
(45) Date de publication et mention de la délivrance du brevet: **07.05.2008**
(21) Numéro de dépôt: 06291564.0
(22) Date de dépôt: 06.10.2006
(51) Int. Cl.: B60P 7/04, B60J 5/06

(54) **Structure d'abri d'une surface, en particulier d'un plateau de charge**
Verdeckaufbau für eine Fläche, insbesondere eine Ladefläche
Covering structure for a surface, in particular a loading platform

(30) Priorité: 12.10.2005 FR 0510407
(43) Date de publication de la demande: 18.04.2007
(73) Titulaire: S.A. Libner, 79400 Saint-Maixent l'Ecole (FR)
(72) Inventeur: Libner, Hervé, 79400 Saint Maixent l'Ecole (FR)
(74) Mandataire: Laget, Jean-Loup

(56) Documents cités:
- EP-A- 0 925 975
- DE-C1- 10 145 000
- FR-A- 2 791 942
- US-A- 4 762 361

## Description

La présente invention concerne une structure d'abri d'une surface, en particulier d'un plateau de charge, tel que plateforme de camion, de remorque, de wagon ou similaire pouvant occuper notamment deux positions extrêmes, l'une déployée sous forme d'abri de ladite surface, l'autre de faible encombrement libérant au moins une partie de ladite surface, cette structure étant formée de mâts déplaçables le long d'au moins une structure de guidage entre lesdites positions longitudinales extrêmes et supportant une structure souple du genre bâche repliable à la manière d'un soufflet d'accordéon.

Le transport de marchandises, notamment le fret, sur un plateau de charge est une opération très courante dans de nombreuses industries. Ce transport nécessite des véhicules de conceptions diverses suivant le type de marchandises à déplacer, notamment suivant le type de contenant dans lesquelles les marchandises sont stockées. En effet, les véhicules ne répondent pas aux mêmes exigences suivant qu'ils sont destinés à transporter des conteneurs volumineux ou un chargement formé de plusieurs contenants. Différents dispositifs ont été imaginés pour répondre aux différents cas de figure.

Le brevet FR 2 791 942 décrit un conteneur de transport à rideaux coulissants équipant une remorque de camion. Les rideaux du conteneur peuvent se replier vers l'arrière ou l'avant de la remorque de manière à laisser ladite remorque libre. On peut ainsi opérer le chargement de marchandises par le haut ou le côté de la remorque, facilitant ledit chargement et la mise en place des marchandises. On déplie ensuite les rideaux afin de reformer la structure d'abri de la remorque et protéger la cargaison. Le dépliage des panneaux doit être possible indépendamment de la cargaison présente dans la remorque. Ainsi, les panneaux sont repliés de manière à faire saillie vers l'extérieur du camion. Les marchandises ne peuvent donc pas bloquer le dépliage des panneaux. Ce dispositif présente néanmoins un inconvénient. En effet, il n'est pas adapté au transport de conteneur. Une fois repliés, les panneaux font saillie vers l'extérieur du camion et dépassent donc du gabarit du véhicule. En présence d'un conteneur sur la remorque, il est impossible de déplier les panneaux pour venir recouvrir le conteneur. Or, il est interdit de rouler avec un véhicule dont certains éléments dépassent du gabarit. Un tel dispositif de transport ne permet donc pas le transport de marchandises classiques et de conteneurs.

Le dispositif décrit dans la demande de brevet FR 2 645 494 permet de résoudre cet inconvénient. Ce document décrit une remorque pour véhicule susceptible de recevoir au moins un conteneur. Ladite remorque est constituée d'un plateau des coins duquel s'élèvent des montants verticaux. Ces montants verticaux sont reliés entre eux par deux longerons horizontaux. Les longerons sont équipés de moyens permettant leur écartement afin de charger la remorque avec un conteneur par le haut de manière aisée, notamment avec une grue. Cependant, les montants et les longerons n'étant pas démontables, il est difficile de réaliser un chargement de cargaison classique par le côté ou le haut avec une telle remorque. Le dispositif décrit dans ce document n'autorise donc pas un chargement aisé d'un conteneur ou d'une cargaison classique.

D'autres exemples de structures d'abri sont fournis dans les documents US-4.762.361 et DE-10145000. A nouveau, la conception des structures ne permet pas à l'aide d'une même structure le transport de conteneur ou d'autres types de charge.

Un but de l'invention est donc de proposer une structure d'abri d'une surface telle qu'un plateau de charge dont la conception permet notamment, indifféremment, le chargement par le haut ou l'un des côtés dudit plateau, d'un conteneur ou d'une cargaison classique.

A cet effet, l'invention a pour objet une structure d'abri d'une surface, en particulier d'un plateau de charge, tel qu'une plateforme de camion, de remorque, de wagon ou similaire, pouvant occuper notamment deux positions extrêmes, l'une déployée sous forme d'abri de ladite surface, telle qu'un plateau de charge, l'autre de faible encombrement libérant au moins une partie de ladite surface, cette structure présentant au moins une paroi ou partie de paroi mobile repliable formée au moins de mâts déplaçables le long d'au moins un chemin de guidage entre lesdites positions longitudinales extrêmes et destinés à supporter au moins une structure, de protection ou de couverture, repliable à la manière d'un soufflet d'accordéon, caractérisée en ce qu'il est prévu, entre deux mâts de la paroi ou partie de paroi mobile, au moins un montant vertical, relié auxdits mâts par l'intermédiaire de biellettes, pour pouvoir être déplacé à volonté de part et d'autre de la surface ou plan de déplacement des mâts, de manière à autoriser, lors du repliement de l'abri, la formation des plis du soufflet soit d'un côté de la surface de déplacement des mâts, soit de l'autre côté de cette même surface.

En d'autres termes, chaque montant de la paroi mobile relié à deux mâts par l'intermédiaire de billettes présente, en position repliée de l'abri, deux positions de repli ou de rangement sélectivement activables, l'une dans laquelle il s'étend d'un côté de la surface ou plan de déplacement des mâts, par exemple à l'intérieur du périmètre délimité par la structure d'abri en position déployée, l'autre dans laquelle il s'étend de l'autre côté de la surface de déplacement des mâts par exemple à l'extérieur du périmètre délimité par la structure d'abri en position déployée. Le déplacement des montants est donc variable par rapport au plan ou surface de déplacement des mâts lors du repliement de l'abri puisque les montants sont déplacés à volonté d'un côté ou de l'autre du plan ou surface de déplacement des mâts lors du repliement de l'abri. Il doit être noté qu'on entend dans ce qui suit par plan ou surface de déplacement des mâts, la surface balayée par les mâts lors de leur déplacement le long du chemin de guidage et de leur passage de la position déployée à la position repliée de l'abri ou inversement. La surface de déplacement correspond dans les exemples représentés à la surface verticale contenant les mâts et passant par la trajectoire ou chemin de guidage suivie par les mâts.

La possibilité de replier les montants de la structure d'abri indifféremment vers l'intérieur ou l'extérieur du périmètre délimité par ladite structure d'abri en position déployée et permettre ainsi la formation des plis du soufflet soit à l'extérieur du périmètre délimité par la structure d'abri en position déployée, soit à l'intérieur de ce même périmètre autorise notamment un chargement aisé d'une cargaison classique ainsi que le transport de conteneurs.

L'invention sera bien comprise à la lecture de la description suivante d'exemples de réalisation, en référence aux dessins annexés parmi lesquels,
la figure 1 représente une vue partielle d'ensemble d'un plateau équipé d'une structure d'abri conforme à l'invention,

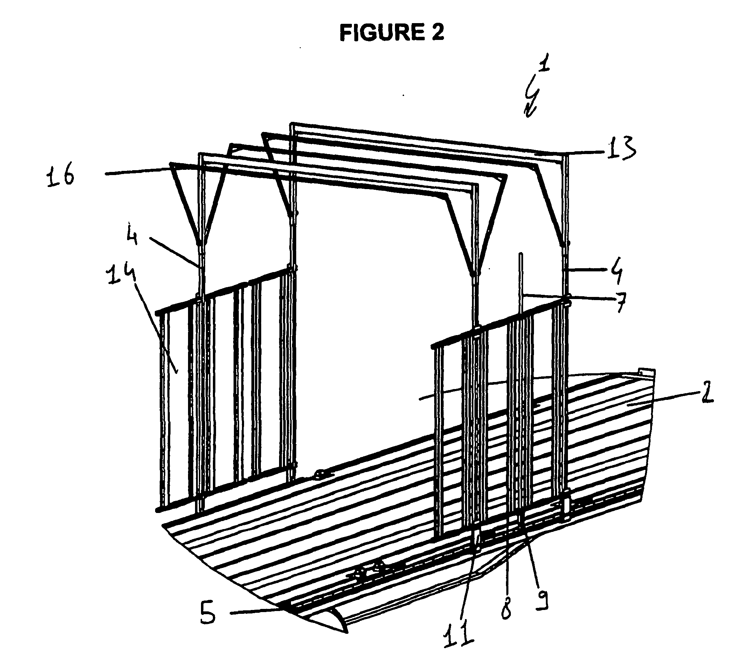

la figure 2 représente une vue partielle simplifiée en perspective d'une structure d'abri en position déployée,

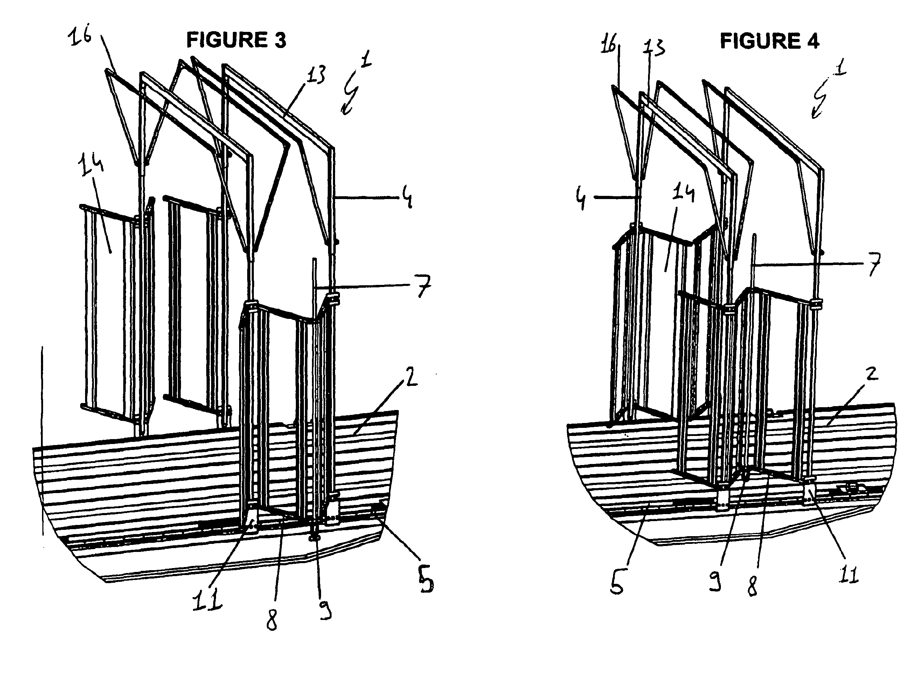

la figure 3 représente une vue partielle simplifiée de la structure d'abri de la figure 2 en position repliée vers l'extérieur du plateau,
la figure 4 représente une vue partielle simplifiée de la structure d'abri de la figure 2 en position repliée vers l'intérieur du plateau,
la figure 5 représente une vue partielle simplifiée du détail de la liaison entre mâts et montants.

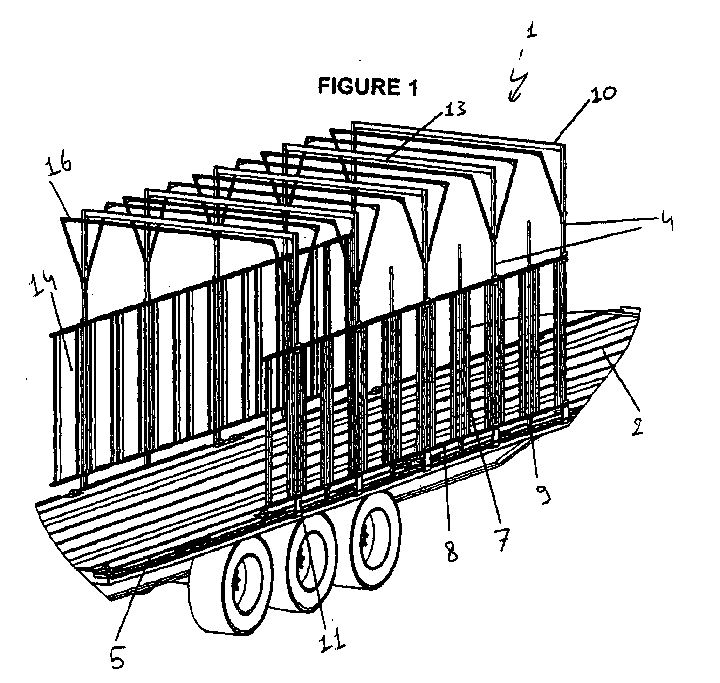

Comme représenté à la figure 1, la structure 1 d'abri, objet de l'invention, est principalement constituée d'une ossature articulée, généralement recouverte d'au moins une structure de couverture ou de protection (non représentée).
Cette structure de couverture ou de protection repliable à la manière d'un soufflet d'accordéon est généralement une structure souple, telle qu'une bâche, mais pourrait, de manière équivalente, être formée de panneaux venant s'accrocher sur l'ossature articulée repliable à la manière d'un accordéon.

La structure 1 d'abri est solidarisée au plateau 2 de charge d'un camion afin de former une enceinte protectrice de la charge présente sur ledit plateau 2. La structure 1 d'abri comporte donc deux faces latérales, un toit, une face avant et une face arrière. Les faces latérales sont des parois mobiles dont au moins l'une, de préférence les deux, sont formées au moins de mâts 4 verticaux se déplaçant à coulissement sur ou le long d'un chemin 5 de guidage délimité à l'aide de moyens appropriés. Dans les exemples représentés, l'ossature de la structure 1 d'abri se compose de deux lignes ou séries de mâts 4 verticaux montées chacune à coulissement sur un chemin 5 de guidage ménagé sur le plateau 2, le long de chaque des bords longitudinaux de ce dernier. Chaque série de mâts délimite une paroi latérale de la structure d'abri, cette paroi latérale étant repliable à la manière d'un soufflet d'accordéon. Chaque chemin 5 de guidage est, de préférence, constitué d'un rail ouvert en direction de l'extérieur du plateau dans lequel les mâts 4 d'une série peuvent coulisser au moyen de galets 6 équipant leurs extrémités inférieures. Ces galets 6 sont portés par une platine 11 qui forme avec les galets 6 un chariot de support de mât 4. Le plateau 2 de charge comporte donc deux séries de mâts 4 équipés de chariots, chaque série de mâts se déplaçant dans un chemin 5 de guidage sous forme de rail ménagé le long d'un bord longitudinal du plateau 2.

Un ou des montants 7 verticaux sont disposés entre lesdits mâts 4 et reliés à ces derniers au moyen de biellettes 8. L'ossature de la structure 1 est donc formée au final de mâts 4, de biellettes 8 et de montants 7. Lesdites biellettes 8 permettent d'articuler le reste de l'ossature de la structure 1 de manière à pouvoir la replier à la manière d'un soufflet d'accordéon. En effet, les montants 7 n'étant pas montés à coulissement dans le chemin de guidage, ils peuvent se déplacer latéralement par rapport au plateau 2 permettant ainsi de faire passer la structure 1 d'abri dans une position repliée. En position repliée de la dite structure 1, les montants 7 sont repoussés, vers l'intérieur ou l'extérieur du plateau, afin que la structure 1 et plus particulièrement les parois mobiles repliables constituant les faces latérales de la structure adoptent une forme de soufflet d'accordéon, cette forme étant épousée ou suivie par la structure de protection ou de couverture. Les parois mobiles repliables à la manière d'un soufflet d'accordéon de la structure d'abri présentent donc des soufflets positionnables à l'extérieur ou à l'intérieur de l'espace délimité par les surfaces de déplacement des mâts.

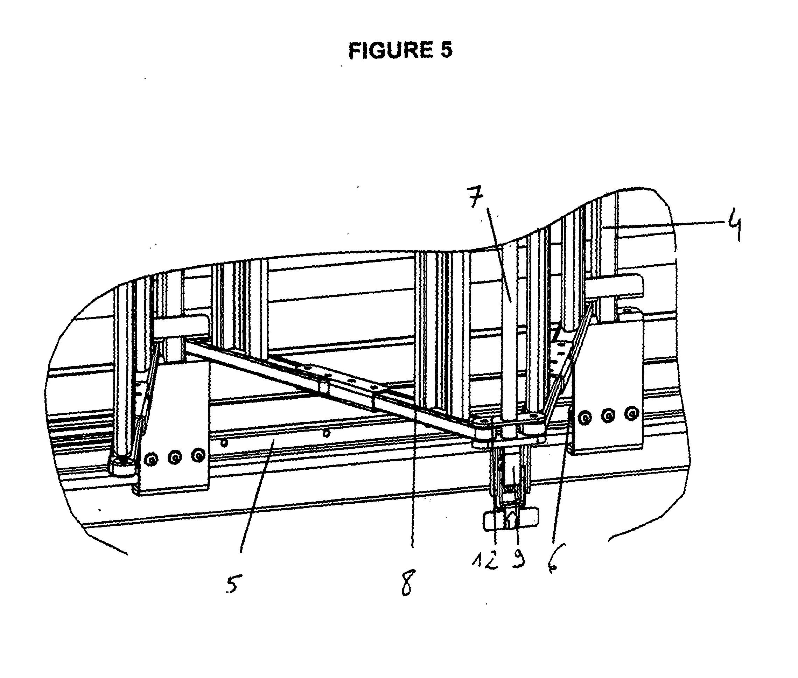

La figure 5 illustre le détail de la liaison entre montants 7 et mâts 4. Comme mentionné ci-dessus, deux mâts 4 sont reliés chacun par deux biellettes 8 sensiblement parallèles à au moins un montant 7 parallèle aux mâts 4. Montant(s) 7, mât 4 et biellettes forment à chaque fois un cadre articulé. Les biellettes 8 d'un cadre peuvent être reliées entre elles par des éléments 14 de panneaux pour renforcer la résistance mécanique de la structure. Chaque montant 7 est équipé à chacune de ses extrémités d'une pièce 12 de liaison du montant 7 aux biellettes 8. Ces biellettes 8 sont articulées sur ladite pièce 12 de liaison autour d'un axe parallèle à l'axe du montant 7 comme l'illustre la figure 5. Bien évidemment, d'autres modes de réalisation de la liaison des biellettes 8 au montant 7 peuvent être envisagés sans sortir du cadre de l'invention. De la même manière, chaque autre extrémité de biellette 8 est articulée au chariot portant le mât 4 ou à une pièce portée par ledit mât. A nouveau, cette articulation est réalisée à l'aide d'un pivot d'axe parallèle à l'axe du mât 4.

Comme mentionné ci-dessus, en position repliée de la structure 1, les montants 7 peuvent, grâce au degré de liberté des liaisons des biellettes et à la conception des montants, se déplacer en direction de l'intérieur ou de l'extérieur de l'espace délimité par les mâts 4. Il est avantageux qu'un sens de repli des montants 7 soit privilégié par rapport à l'autre. Ainsi, il est prévu, au voisinage d'au moins une extrémité de chaque montant 7, une butée 9 mobile entre deux positions, l'une de verrouillage empêchant un déplacement du montant 7 dans une direction perpendiculaire au plan ou surface de déplacement des mâts 4, l'autre autorisant un déplacement du montant 7 dans ladite direction. Cette butée 9 permet, lors du repli de la structure, de définir un sens de repli privilégié dans lequel les opérations à effectuer sont rapides. En effet, pour replier ladite structure 1 d'abri, il suffit d'exercer une poussée sur une extrémité de ladite structure 1. Cette poussée fait coulisser les deux séries de mâts 4 le long de leur chemin 5 de guidage respectif rapprochant ainsi les mâts 4 d'une série les uns des autres et actionnant les articulations des biellettes 8. L'actionnement des biellettes 8 entraîne alors un mouvement des montants 7 perpendiculairement à l'axe longitudinal du plateau 2 pour donner à la structure 1 au niveau des faces latérales une forme de soufflet d'accordéon. La présence des butées 9 assure à l'opérateur effectuant la poussée que les montants 7 se replient tous dans le même sens.

Dans un mode de réalisation préféré, la position de verrouillage de la butée 9 correspond à une position dans laquelle ladite butée 9 empêche le déplacement du montant 7 en direction de l'intérieur de l'abri, en particulier en direction de l'intérieur du périmètre de la surface couverte en position déployée de la structure d'abri. Ainsi, le sens privilégié de repli des montants 7 correspond à un repli vers l'extérieur du plateau 2. Une simple poussée de l'opérateur entraîne donc un repli des montants vers l'extérieur du plateau 2 repliant ainsi la structure 1 d'abri de manière à ce qu'elle libère complètement la surface du plateau 2. Ce mode de repli correspond à la position de transport de chargement classique. En effet, le plateau doit être dégagé pour permettre le chargement d'une cargaison par le haut ou le côté et ladite cargaison ne doit pas gêner le déploiement de la structure 1 d'abri une fois le chargement effectué. Une fois repliés vers l'extérieur, les montants 7 ne font pas saillie à l'intérieur du plateau 2, même lors de l'opération de dépliage.

En position déverrouillée, la butée 9 permet le repli des montants 7 indifféremment dans l'une ou l'autre direction, c'est-à-dire vers l'intérieur ou l'extérieur du périmètre délimité par le plateau 2. La butée 9 est généralement réalisée sous forme d'une pièce pivotante ou coulissante s'étendant à l'extérieur du périmètre de la surface couverte en position déployée de la structure d'abri soit au niveau du chemin 5 de guidage en position active de la butée, soit au-dessus du chemin 5 de guidage en position inactive de la butée 9. Ladite butée 9 peut ainsi être apte à pivoter suivant un axe parallèle au chemin 5 de guidage ou à coulisser suivant un axe parallèle à l'axe du montant et perpendiculaire au chemin 5 de guidage, de manière à passer d'une position active à une position inactive dans laquelle elle permet un libre déplacement du montant de part et d'autre du chemin 5 de guidage des mâts formé par un rail. Le montant 7 est donc relié aux mâts avec son extrémité inférieure qui s'étend au-dessus du chemin 5 de guidage dans au moins une position.

La position active correspond à la position de verrouillage dans laquelle seul le repli des montants 7 vers l'extérieur est possible. En position inactive les deux sens sont envisageables.

Il pourrait, de manière équivalente, être envisagé d'équiper au moins l'un des montants 7 entre deux mâts 4 de deux butées mobiles sélectivement activables pouvant fonctionner chacune de manière équivalente à la butée 9.

La délimitation et l'isolation du volume de chargement du plateau 2 sont réalisées au moyen d'une bâche venant à recouvrement dudit volume. Dans un mode de réalisation avantageux, la structure 1 d'abri supporte deux structures souples du type bâche, l'une desdites structures souples venant à recouvrement des faces latérales de la structure 1 d'abri, l'autre venant recouvrir le toit de la structure 1 d'abri. La structure souple latérale est de préférence réalisée en deux parties, chacune d'elles couvrant une face latérale du volume de chargement. Cette conception permet un positionnement aisé de la structure souple de toit indépendamment des structures souples latérales. Lesdites structures souples sont solidarisées à l'ossature de la structure 1 d'abri par des moyens intégrés à ces structures souples. En effet, la structure 1 présente deux parois mobiles formant les faces latérales de l'abri, chaque paroi étant formée d'une série de mâts 4 déplaçables le long d'un chemin 5 de guidage, lesdits chemins 5 de guidage parallèles entre eux étant ménagés chacun le long d'un bord longitudinal de la surface de charge à couvrir tandis que les mâts 4 de chaque série respectivement en regard sont reliés entre eux par une traverse 13 pour former une pluralité d'arceaux parallèles, chaque arceau étant équipé, en outre, de deux arches 16, reliées de manière articulée audit arceau, pour passer d'une position déployée dans laquelle elles s'étendent de part et d'autre de l'arceau et forment des traverses supplémentaires, à une position de repli dans laquelle elles s'étendent en applique contre ledit arceau, chaque arche étant logée au moins partiellement dans un fourreau de la structure de protection ou de couverture souple de type bâche venant à recouvrement du toit de la structure 1 d'abri afin de garantir le guidage de cette dernière. Les mâts 4 en regard sont reliés entre eux par une traverse 13 pour former une pluralité d'arceaux parallèles, chaque arceau étant équipé en outre de deux arches 16, reliées de manière articulée audit arceau, pour passer d'une position déployée dans laquelle elles s'étendent de part et d'autre de l'arceau et forment des traverses supplémentaires, à une position de repli dans laquelle elles s'étendent en applique contre ledit arceau, chaque arche 16 étant logée au moins partiellement dans un fourreau de la structure souple de type bâche venant à recouvrement du toit de la structure 1 d'abri afin de garantir le guidage de cette dernière. Des fourreaux sont donc ménagés dans la bâche de toit afin de pouvoir y insérer les arches 16. De préférence, ces fourreaux (non représentés) sont obtenus par couture d'un empiècement sur la face intérieure de la bâche. Cet empiècement délimitant avec la bâche un conduit traversant. Cet empiècement est équipé de moyens auto-agrippants de type Velcro (marque déposée) pour passer d'une position ouverte, où l'introduction d'une traverse à l'intérieur du fourreau est possible, à une position fermée où traverse et bâche de toit sont solidaires. Des fourreaux sensiblement identiques peuvent aussi être disposés sur la structure souple latérale de manière à la solidariser avec les montants 7. Dans ce cas, chaque montant 7 s'insère dans un fourreau ménagé sur la structure souple latérale.

Les opérations nécessaires pour replier la structure 1 d'abri vers l'intérieur du périmètre délimité par le plateau 2 vont maintenant être décrites. Le repli des montants 7 vers l'extérieur étant privilégié, il est nécessaire de déverrouiller les butées 9 afin de pouvoir procéder au repli dans l'autre direction. Les butées 9 ne sont en général pas accessibles directement depuis l'extérieur du plateau 2. Elles sont en effet recouvertes par la structure souple latérale. Ainsi, la structure souple latérale du genre bâche supportée par la structure 1 d'abri est repliable vers l'extérieur, au niveau de sa base, pour former un rabat maintenu en applique contre la face externe de la bâche par des moyens de maintien appropriés, de manière à faciliter l'accès aux butées 9 de verrouillage. On relève donc la bâche au niveau du chemin 5 de guidage à la manière d'un ourlet, afin de découvrir les butées 9. Un système de sangles disposées sur la longueur de ladite structure souple permet de maintenir la bâche en position pendant que l'opérateur opère le déverrouillage des butées 9.

Pour replier la structure en positionnant les montants 7 vers l'intérieur, on commence par ouvrir la porte arrière du plateau 2 et désolidariser le cadre de ladite porte arrière du plateau. En effet, en position de transport, le cadre de la porte arrière est évidemment immobilisé par rapport au plateau 2 de manière à éviter un coulissement et un repli involontaires de la structure 1 d'abri. On relève ensuite la bâche latérale au moyen des sangles puis on déverrouille les butées 9 de manière à autoriser le déplacement des montants 7 vers l'intérieur du plateau 2. De préférence, on ne déverrouille pas la butée 9 équipant le montant 7 situé le plus vers l'arrière du plateau 2. On dispose ainsi d'une structure rigide pour effectuer plus facilement une poussée sur la structure 1 d'abri. On oriente ensuite légèrement chaque montant 7 et l'articulation lui correspondant vers l'intérieur du plateau 2. Ainsi, une simple poussée va provoquer le repli des montants 7 dans le sens souhaité. On opère alors une poussée sur le cadre arrière de la structure 1 d'abri de manière à faire coulisser les mâts 4 et à replier ladite structure 1 en forme de soufflet d'accordéon. Une fois la structure 1 d'abri repliée, on déverrouille alors la dernière butée afin de replier le dernier montant 7. Dans un mode de réalisation préféré, il est prévu, respectivement couplables aux mâts 4 de chaque extrémité de la structure, des arches 10 rigides pour délimiter les faces avant et arrière de la structure 1 d'abri, l'une des arches dite arrière servant à la réception des portes de fermeture de la structure 1. Ces arches supplémentaires permettent de rigidifier les extrémités de la structure 1 d'abri. Elles permettent notamment à un opérateur d'effectuer seul l'opération de repli, principalement l'étape de poussée. La position repliée vers l'intérieur des montants 7 correspond à la position de transport de conteneur. En effet, le plateau étant libre, le chargement d'un tel conteneur, au moyen d'une grue par exemple, est possible. De plus, les montants 7 ne dépassant pas du gabarit du plateau 2, le transport sur route du conteneur est autorisé.

Une fois repliée, la structure 1 d'abri est généralement placée à l'avant du plateau. Cependant, les arches 10 rigides d'extrémité sont pourvues de moyens de verrouillage empêchant, en position active, tout repli desdites arches 10 vers l'intérieur du plateau 2 comme vers l'extérieur pour faciliter le guidage de ladite structure 1. En rigidifiant les arches 10 de la structure 1 d'abri, on dispose d'un cadre indéformable sur lequel les efforts de poussée sont uniformément répartis. On peut ainsi faire coulisser les deux côtés de ladite structure 1 le long des deux chemins 5 de guidage parallèles, en ne poussant que sur l'un des côtés de la structure 1 d'abri.

Il doit être noté que l'invention a plus particulièrement été décrite pour une application à l'abri d'un plateau de charge. Toutefois, une telle structure d'abri peut être utilisée pour la couverture de n'importe quelle surface sans sortir du cadre de l'invention.

## Revendications

1. Structure (1) d'abri d'une surface, en particulier d'un plateau (2) de charge, tel qu'une plateforme de camion, de remorque, de wagon ou similaire, pouvant occuper notamment deux positions extrêmes, l'une déployée sous forme d'abri de ladite surface, telle qu'un plateau (2) de charge, l'autre de faible encombrement libérant au moins une partie de ladite surface, cette structure (1) présentant au moins une paroi ou partie de paroi mobile repliable à la manière d'un soufflet d'accordéon formée au moins de mâts (4) déplaçables le long d'au moins un chemin (5) de guidage entre lesdites positions longitudinales extrêmes et destinés à supporter au moins une structure, de protection ou de couverture, repliable à la manière d'un soufflet d'accordéon,
**caractérisée en ce qu**'il est prévu, entre deux mâts (4) de la paroi ou partie de paroi mobile, au moins un montant (7) vertical, relié auxdits mâts par l'intermédiaire de biellettes (8), pour pouvoir être déplacé à volonté de part et d'autre de la surface ou plan de déplacement des mâts (4), de manière à autoriser, lors du repliement de l'abri, la formation des plis du soufflet soit d'un côté de la surface de déplacement des mâts (4), soit de l'autre côté de cette même surface.

2. Structure (1) d'abri selon la revendication 1,
**caractérisée en ce qu**'il est prévu, au voisinage d'au moins une extrémité de chaque montant (7), une butée (9) mobile entre deux positions, l'une de verrouillage empêchant un déplacement du montant (7) dans une direction perpendiculaire au plan de déplacement des mâts (4), l'autre autorisant un déplacement du montant (7) dans ladite direction.

3. Structure (1) d'abri selon la revendication 2,
**caractérisée en ce que** la position de verrouillage de la butée (9) correspond à une position dans laquelle ladite butée (9) empêche le déplacement du montant (7) en direction de l'intérieur de l'abri.

4. Structure (1) d'abri selon la revendication 2,
**caractérisée en ce que** la butée (9) est réalisée sous forme d'une pièce pivotante ou coulissante s'étendant à l'extérieur du périmètre de la surface couverte, en position déployée de la structure (1) d'abri, soit au niveau du chemin (5) de guidage en position active, soit au-dessus de ce dernier en position inactive.

5. Structure (1) d'abri selon l'une quelconque des revendications 2 à 4,
**caractérisée en ce qu**'elle supporte une structure souple de protection ou de couverture du genre bâche repliable à la manière d'un soufflet d'accordéon, cette structure souple étant repliable vers l'extérieur au niveau de sa base, pour former un rabat maintenu en applique contre la face externe de la bâche par des moyens de maintien appropriés, de manière à faciliter l'accès aux butées (9) de verrouillage.

6. Structure (1) d'abri selon l'une quelconque des revendications 1 à 5,
**caractérisée en ce qu**'elle supporte deux structures de protection ou de couverture souples du type bâche, l'une desdites structures souples venant à recouvrement des faces latérales de la structure (1) d'abri, l'autre venant recouvrir le toit de la structure (1) d'abri.

7. Structure (1) d'abri selon la revendication 1,
**caractérisée en ce qu**'elle présente deux parois mobiles formant les faces latérales de l'abri, chaque paroi étant formée d'une série de mâts (4) déplaçables le long d'un chemin (5) de guidage, lesdits chemins (5) de guidage parallèles entre eux étant ménagés chacun le long d'un bord longitudinal de la surface de charge à couvrir tandis que les mâts (4) de chaque série, respectivement en regard, sont reliés entre eux par une traverse (13) pour former une pluralité d'arceaux parallèles, chaque arceau étant équipé, en outre, de deux arches (16), reliées de manière articulée audit arceau, pour passer d'une position déployée dans laquelle elles s'étendent de part et d'autre de l'arceau et forment des traverses supplémentaires, à une position de repli dans laquelle elles s'étendent en applique contre ledit arceau, chaque arche étant logée au moins partiellement dans un fourreau de la structure de protection ou de couverture souple de type bâche venant à recouvrement du toit de la structure (1) d'abri afin de garantir le guidage de cette dernière.

8. Structure (1) d'abri selon la revendication 1,
**caractérisée en ce que** chaque montant (7) s'insère dans un fourreau ménagé sur la structure de protection ou de couverture souple de type bâche venant à recouvrement des faces latérales de la structure (1) d'abri.

9. Structure (1) d'abri selon l'une des revendications 1 à 8,
**caractérisé en ce qu**'il est prévu, respectivement coupable aux mâts (4) de chaque extrémité de la structure, des arches (10) rigides pour délimiter les faces avant et arrière de la structure (1) d'abri, l'une des arches dite arrière servant à la réception des portes de fermeture de la structure (1).

10. Structure (1) d'abri selon la revendication 9,
**caractérisé en ce que** les arches (10) rigides d'extrémité sont pourvues de moyens de verrouillage empêchant, en position active, tout repli desdites arches (10) vers l'intérieur de la surface de charge (2) comme vers l'extérieur pour faciliter le guidage de ladite structure (1).

## Claims

1. Structure (1) for sheltering an area, in particular a load floor (2), such as the platform of a lorry, trailer, wagon or the like, which structure is capable of occupying, especially, two extreme positions, one of them when deployed in the form of a shelter for the said area, such as a load floor (2), and the other a compact position which frees at least part of the said area, the said structure (1) having at least one movable wall or part of a wall which can be folded up after the manner of an accordion bellows and is made up at least of posts (4) which can be displaced along at least one guide path (5) between the said extreme longitudinal positions and are intended to support at least one protective or covering structure which can be folded up after the manner of an accordion bellows,
**characterised in that** there is provided, between two posts (4) of the movable wall or part of a wall, at least one vertical upright (7) which is connected to the said posts via connecting rods (8) so as to be capable of being displaced, at will, on either side of the area or plane of displacement of the posts (4), in such a way as to permit, when the shelter is folded up, the formation of folds of the bellows, either on one side of the area of displacement of the posts (4) or on the other side of this same area.

2. Sheltering structure (1) according to claim 1,
**characterised in that** there is provided, in the vicinity of at least one end of each upright (7), a stop (9) which is movable between two positions, one of them a locking position preventing displacement of the upright (7) in a direction perpendicular to the plane of displacement of the posts (4), and the other permitting displacement of the upright (7) in the said direction.

3. Sheltering structure (1) according to claim 2,
**characterised in that** the position for locking the stop (9) corresponds to a position in which the said stop (9) prevents displacement of the upright (7) in the direction of the interior of the shelter.

4. Sheltering structure (1) according to claim 2,
**characterised in that** the stop (9) is produced in the form of a pivoting or sliding piece extending outside the perimeter of the area covered, when the sheltering structure (1) is in the deployed position, either at the level of the guide path (5) when in the active position, or above the said path when in the inactive position.

5. Sheltering structure (1) according to any one of claims 2 to 4,
**characterised in that** it supports a flexible protective or covering structure of the tarpaulin type which can be folded up after the manner of an accordion bellows, the said flexible structure being capable of being folded up towards the outside at the level of its base, so as to form a flap which is kept applied against the outer face of the tarpaulin by suitable holding means, in such a way as to facilitate access to the locking stops (9).

6. Sheltering structure (1) according to any one of claims 1 to 5,
**characterised in that** it supports two flexible protective or covering structures of the tarpaulin type, one of the said flexible structures having an overlap with the lateral faces of the sheltering structure (1), and the other overlapping the roof of said sheltering structure (1).

7. Sheltering structure (1) according to claim 1,
**characterised in that** it has two movable walls forming the lateral faces of the shelter, each wall being made up of a series of posts (4) which are displaceable along a guide path (5), the said guide paths (5), which are parallel with one another, being each arranged along a longitudinal edge of the load area to be covered, while the posts (4) in each series, which face each other, are connected to one another by a crosspiece (13) so as to form a plurality of parallel hoops, each hoop being equipped, in addition, with two arches (16) which are connected to the said hoop in an articulated manner so as to move from a deployed position in which they extend on either side of the hoop and form supplementary crosspieces, to a folding-up position in which they extend in a manner applied against the said hoop, each arch being housed, at least partially, in a sheath belonging to the flexible protective or covering structure of the tarpaulin type which has an overlap with the roof of the sheltering structure (1) in order to guarantee guidance of the latter.

8. Sheltering structure (1) according to claim 1,
**characterised in that** each upright (7) is inserted in a sheath arranged on the flexible protective or covering structure of the tarpaulin type which has an overlap with the lateral faces of the sheltering structure (1).

9. Sheltering structure (1) according to one of claims 1 to 8,
**characterised in that** rigid arches (10), which can be coupled, respectively, to the posts (4) on each end of the structure, are provided so as to delimit the front and rear faces of the sheltering structure (1), one of the so-called "rear" arches serving to receive doors for closing the structure (1).

10. Sheltering structure (1) according to claim 9,
**characterised in that** the rigid end arches (10) are provided with locking means which, in the active position, prevent any folding-up of the said arches (10) towards the inside of the load area (2) as well as towards the outside so as to facilitate guidance of the said structure (1).

## Patentansprüche

1. Verdeckaufbau (1) für eine Fläche, insbesondere für eine Ladefläche (2) wie eine Lastwagen-, Anhänger, Wagon- oder ähnliche Plattform, der insbesondere zwei äußere Positionen einnehmen kann, eine ausgefahrene Position in Form eines Verdecks für die Fläche wie eine Ladefläche (2) und eine platzsparende Position, die mindestens einen Teil der Fläche freigibt, wobei der Aufbau (1) mindestens eine bewegliche Wand oder einen beweglichen Wandabschnitt aufweist, die bzw. der wie ein Akkordeonbalg faltbar ist und wenigstens von Vertikalstützen (4) gebildet wird, die entlang mindestens einer Führungsbahn (5) zwischen den äußeren Längspositionen verschiebbar sind und dafür vorgesehen sind, mindestens einen Schutz- oder Abdeckaufbau zu tragen, der wie ein Akkordeonbalg faltbar ist, **dadurch gekennzeichnet, dass** zwischen zwei Vertikalstützen (4) der beweglichen Wand oder des beweglichen Wandabschnittes mindestens eine Vertikalstrebe (7) vorgesehen ist, die über Stangen (8) mit den Vertikalstützen verbunden ist, um auf der Lauffläche oder Laufebene der Vertikalstützen (4) beliebig hin- und hergeschoben werden zu können, so dass sie beim Zusammenfalten des Verdecks die Bildung von Balgfalten entweder von der einen Seite der Lauffläche der Vertikalstützen (4) oder von der anderen Seite der Lauffläche zulässt.

2. Verdeckaufbau (1) nach Anspruch 1, **dadurch gekennzeichnet, dass** in der Nähe mindestens eines Endes jeder Strebe (7) ein zwischen zwei Positionen beweglicher Anschlag (9) vorgesehen ist, einer Verriegelungsposition, die eine Verschiebung der Strebe (7) in eine senkrecht zur Laufebene der Vertikalstützen (4) verlaufende Richtung verhindert, und einer anderen Position, die eine Verschiebung der Strebe (7) in diese Richtung zulässt.

3. Verdeckaufbau (1) nach Anspruch 2, **dadurch gekennzeichnet, dass** die Verriegelungsposition des Anschlags (9) einer Position entspricht, in der der Anschlag (9) die Verschiebung der Strebe (7) in Richtung des Verdeckinneren verhindert.

4. Verdeckaufbau (1) nach Anspruch 2, **dadurch gekennzeichnet, dass** der Anschlag (9) in Form eines drehbeweglichen oder gleitenden Teils ausgeführt ist, das sich in der ausgefahrenen Position des Verdeckaufbaus (1) entweder, in der aktiven Position, an der Führungsbahn (5) oder, in der inaktiven Position, über der Führungsbahn über den Rand der verdeckten Fläche nach außen erstreckt.

5. Verdeckaufbau (1) nach einem der Ansprüche 2 bis 4, **dadurch gekennzeichnet, dass** er einen planenartigen flexiblen Schutz- oder Abdeckaufbau trägt, der wie ein Akkordeonbalg faltbar ist, wobei der flexible Aufbau an seinem Fuß nach außen faltbar ist, um eine Klappe zu bilden, die von geeigneten Haltemitteln an der Außenseite der Plane anliegend gehalten wird, um den Zugang zu den Verriegelungsanschlägen (9) zu erleichtern.

6. Verdeckaufbau (1) nach einem der Ansprüche 1 bis 5, **dadurch gekennzeichnet, dass** er zwei planenartige flexible Schutz- oder Abdeckaufbauten trägt, welcher eine flexible Aufbau die Seiten des Verdeckaufbaus (1) abdeckt und welcher andere das Dach des Verdeckaufbaus (1) abdeckt.

7. Verdeckaufbau (1) nach Anspruch 1, **dadurch gekennzeichnet, dass** er zwei bewegliche Wände aufweist, die die Seiten des Verdecks bilden, wobei jede Wand von einer Reihe entlang einer Führungsbahn (5) verschiebbaren Vertikalstützen (4) gebildet wird, wobei die zueinander parallelen Führungsbahnen (5) entlang einer Längskante der zu verdeckenden Ladefläche angeordnet sind, während die sich jeweils gegenüber angeordneten Vertikalstützen (4) jeder Reihe durch einen Querträger (13) miteinander verbunden sind, um eine Mehrzahl von parallelen Bögen zu bilden, wobei jeder Bogen zudem mit zwei Bügeln (16) ausgerüstet ist, die gelenkig mit dem Bogen verbunden sind, um von einer ausgefahrenen Position, in der sie sich von einer Seite des Bogens zur anderen Seite erstrecken und zusätzliche Querträger bilden, in eine Faltposition überzugehen, in der sie sich an den Bogen anliegend erstrecken, wobei jeder Bügel mindestens teilweise in einem Hohlsaum des das Dach des Verdeckaufbaus (1) abdeckenden planenartigen flexiblen Schutz- oder Abdeckaufbaus steckt, um die Führung des Verdeckaufbaus sicherzustellen.

8. Verdeckaufbau (1) nach Anspruch 1, **dadurch gekennzeichnet, dass** jede Strebe (7) in einem Hohlsaum steckt, der in dem die Seiten des Verdeckaufbaus (1) abdeckenden planenartigen flexiblen Schutz- oder Abdeckaufbau angebracht ist.

9. Verdeckaufbau (1) nach einem der Ansprüche 1 bis 8, **dadurch gekennzeichnet, dass** jeweils an die Vertikalstützen (4) an jedem Ende des Aufbaus kuppelbare feststehende Bügel (10) vorgesehen sind, um die Vorder- und Rückseite des Verdeckaufbaus (1) zu begrenzen, wobei einer der Bügel, der hintere Bügel, zur Aufnahme der Türen des Aufbaus (1) dient.

10. Verdeckaufbau (1) nach Anspruch 9, **dadurch gekennzeichnet, dass** die feststehenden Endbügel (10) mit Verriegelungsmitteln versehen sind, die in der aktiven Position ein Zusammenklappen der Bügel (10) nach innen zur Ladefläche (2) und nach außen verhindern, um die Führung des Aufbaus (1) zu erleichtern.
